# FASCICULE DE BREVET EUROPEEN

(11) **EP 1 195 554 B1**
(45) Date de publication et mention de la délivrance du brevet: **18.10.2006**
(21) Numéro de dépôt: 01420191.7
(22) Date de dépôt: 11.09.2001
(51) Int. Cl.: F21V 8/00

(54) **Appareil électroménager comprenant un guide optique**
Haushaltsgerät mit Lichtleiter
Household appliance comprising a light guide

(30) Priorité: 04.10.2000 FR 0012692
(43) Date de publication de la demande: 10.04.2002
(73) Titulaire: SEB S.A., 69130 Ecully (FR)
(72) Inventeur: Gailhard, Thierry, 69970 Chaponnay (FR); Cubizolles, Serge, 38780 Oytier Saint Oblas (FR)

(56) Documents cités:
- EP-A- 0 732 679
- GB-A- 2 324 599

## Description

### Domaine technique

L'invention se rattache au domaine de l'électroménager. Elle vise plus précisément des appareils électroménagers comportant un élément mobile amovible d'un socle dans lequel une information doit être transmise depuis la partie mobile jusqu'au socle. Elle concerne plus spécifiquement un guide optique permettant la transmission d'une information sous forme optique depuis l'élément mobile jusqu'au socle pour une pluralité de positions de l'élément mobile par rapport au socle.

L'invention trouve une application toute particulière pour des bouilloires dites "sans fil", et donc décrites plus en détail pour cette application, mais n'y est en aucun cas limitée.

### Techniques antérieures

On connaît déjà les bouilloires dites "sans fil" qui comportent un socle relié au secteur par un cordon d'alimentation, et qui reçoivent un pot amovible par rapport au socle.

Le pot contient un élément chauffant, typiquement une résistance électrique, qui lorsqu'elle est alimentée permet de chauffer l'eau contenue dans le pot. L'alimentation de la résistance chauffante s'effectue grâce à un connecteur situé au niveau de la zone de contact entre le pot et le socle. Ce connecteur comporte typiquement trois pôles, à savoir une phase, un neutre et une terre.

Pour permettre la mise en place du pot sur le socle dans n'importe quelle position angulaire, on a déjà proposé d'utiliser un connecteur qui présente une configuration circulaire, les trois pôles étant concentriques et situés au centre du pot. De la sorte, le pot n'est pas indexé en rotation par rapport au socle, et il peut tourner sur 360 degrés. Cela permet donc à l'utilisateur de poser le pot sur le socle sans se soucier de son positionnement.

Lorsque le dispositif de régulation du chauffage se situe dans le socle, il peut s'avérer intéressant de transmettre une information relative à la température de l'eau ou de l'élément chauffant, depuis le pot et en direction du socle. Cette information permet par exemple d'arrêter le chauffage lorsque la température d'ébullition a été atteinte, ou lorsque l'élément chauffant atteint une température telle qu'il risque de se dégrader ou de dégrader son voisinage.

La solution consistant à faire évoluer le connecteur en ajoutant un quatrième pôle servant à la transmission d'un signal électrique relatif à la température, n'est pas satisfaisante. En effet, le signal qui serait transmis par la borne supplémentaire serait de faible intensité. Une intensité faible ne serait pas suffisante pour provoquer l'élimination de la couche d'oxydation qui apparaît inévitablement sur les connecteurs.

La transmission de ce signal devra donc s'effectuer sous forme optique, au moyen et de capteurs et récepteurs associés. Or, pour assurer une transmission efficace, il importe que la diode électroluminescente ou infrarouge émettrice située sur le pot, et le récepteur situé sur le socle soient en regard l'un de l'autre. Cette contrainte d'alignement apparaît donc incompatible avec la possibilité de positionner le pot dans n'importe quelle position angulaire par rapport au socle.

La transmission du signal d'information par un émetteur situé au centre du pot serait envisageable, mais nécessiterait une modification substantielle du connecteur circulaire existant décrit ci-avant et qui occupe déjà la zone centrale.

On connaît par ailleurs du document GB 2 324 599 un guide d'onde: permettant d'illuminer, à partir d'une ou de deux LED, toute la périphérie d'un bouton ou d'un cadran au sein d'une automobile.

Un problème que se propose donc de résoudre l'invention est celui de permettre une transmission optique d'un signal entre la partie mobile du pot et le socle, tout en conservant la possibilité de mettre en place le pot sur le socle dans une pluralité de positions angulaires.

### Exposé de l'invention

L'invention concerne un appareil électroménager comprenant un socle et un élément mobile apte à être mis en place de façon amovible sur un socle en conservant une capacité de rotation par rapport audit socle dans lequel l'élément mobile comporte une résistance électrique chauffante alimentée par une source d'énergie électrique associée au socle, via un connecteur situé dans la zone de contact de l'élément mobile et le socle.

Un tel appareil se caractérise en ce que :
- l'élément mobile comporte un émetteur d'une onde électromagnétique, apte à émettre un signal représentatif d'une grandeur physique d'une partie de l'élément mobile ;
- le socle comporte
   - un guide optique épousant une forme générale annulaire, et comportant :
      - une face supérieure sensiblement plane, destinée à recevoir un faisceau incident et en réfracter une partie à l'intérieur du guide en un faisceau transmis ;
      - une face inférieure, sensiblement parallèle à la face supérieure, qui présente un ressaut formant un plan sensiblement perpendiculaire auxdites surfaces inférieure et supérieure , de telle sorte qu'une partie du faisceau transmis est réfracté vers l'extérieur du guide au niveau du ressaut, quel que soit le point d'incidence du faisceau incident sur la face supérieure du guide,
      - dont la face supérieure est en regard de l'émetteur situé sur l'élément mobile,
   - et un récepteur d'ondes électromagnétiques situé en regard du ressaut du guide.

Autrement dit, l'élément mobile présente un émetteur, qui quelle que soit la position angulaire de l'élément mobile par rapport au socle, se trouve au regard du guide, puisque ce dernier possède, vu de dessus, une géométrie circulaire.

A l'inverse, le récepteur situé dans le socle possède une position fixe et reçoit une partie du faisceau émis par i'émetteur et transmis par le guide.

Avantageusement en pratique, on a déterminé que la transmission du faisceau émis était optimale lorsque l'angle d'incidence maximale du faisceau émis par l'émetteur, mesuré par rapport à une perpendiculaire à la face supérieure du guide est compris entre 60° et 80°.

Dans une forme particulière de réalisation, le signal transmis peut être un signal alternatif de rapport cyclique variable, fonction d'une grandeur physique d'une partie de l'élément mobile, et par exemple de la température de l'eau ou de l'élément chauffant lorsqu'il s'agit d'une bouilloire.

Autrement dit, le faisceau lumineux, ou plus généralement l'onde électromagnétique qui transporte le signal contenant l'information souhaitée, peut pénétrer à l'intérieur du guide en n'importe quel point de la face supérieure.

Compte tenu de la géométrie du guide, le faisceau qui a pénétré dans le guide se réfléchit sur les diverses parois de ce guide, et est ainsi acheminé jusqu'au ressaut de la face inférieure.

De la sorte, la diode électroluminescente ou le composant analogue qui émet le faisceau représentatif de l'information, peut adopter une pluralité de positions par rapport au guide. Cet émetteur peut se trouver en n'importe quel point de la surface supérieure du guide qui forme une couronne sensiblement circulaire. Sur la face inférieure du guide, dès lors que le récepteur est situé en face du ressaut, il reçoit obligatoirement une fraction du faisceau circulant à l'intérieur du guide, et ce quelle que soit la zone par laquelle le faisceau émis est entré dans le guide.

En d'autres termes, on conserve un degré de liberté pour le positionnement angulaire de l'émetteur par rapport au récepteur.

Avantageusement en pratique, l'épaisseur du guide mesurée entre ses faces supérieure et inférieure est croissante selon la circonférence du guide, et présente une discontinuité au niveau du ressaut. Autrement dit, il existe sur la face inférieure du guide une rupture notamment marquée entre les zones d'épaisseur maximale et minimale. Cette rupture ou le ressaut constitue la fraction de la surface de la face inférieure par lequel une partie du rayon transmis sort du guide.

Avantageusement en pratique, la face inférieure du guide peut présenter la forme d'une rampe hélicoïdale, correspondant à une variation de l'épaisseur proportionnelle à l'angle de parcours de la circonférence.

Dans une forme préférée, la face supérieure du guide est dépolie, alors que les autres faces du guide sont au contraire polies. On optimise ainsi la pénétration du signal émis à l'intérieur du guide puisque le dépolissage de la face supérieure autorise la pénétration d'un des faisceaux incidents pour une grande plage de valeur de l'angle d'incidence. Au surplus le polissage des autres faces du guide permet au faisceau transmis à l'intérieur du guide de se réfléchir totalement sur les parois qu'il rencontre lors de son parcours jusqu'au ressaut.

Avantageusement en pratique, la face supérieure du guide peut comporter en outre des rainures radiales. De la sorte, la face supérieure présente vis à vis du faisceau incident, des zones formant différents angles, facilitant la pénétration de ce faisceau incident.

Dans une forme particulière de réalisation, les faces latérales intérieure et extérieure reliant les faces supérieure et inférieure sont cylindriques.

### Description sommaire des figures

La manière de réaliser l'invention ainsi que les avantages qui en découlent ressortiront bien de la description du mode de réalisation qui suit, à l'appui des figures annexées dans lesquelles :
La figure 1 est une schématique d'ensemble d'une bouilloire équipée d'un guide optique conforme à l'invention.
La figure 2 est une vue en perspective sommaire de dessus d'un guide conforme à l'invention.
La figure 3 est une vue de dessus du guide de la figure 2.
La figure 4 est une vue de côté du guide de la figure 2.
La figure 5 est un schéma explicatif du fonctionnement du guide conforme à l'invention, dans lequel le guide est montré déployé.

### Manière de réaliser l'invention

Comme déjà évoqué, l'invention concerne un guide optique qui peut être utilisé notamment dans des bouilloires sans fil.

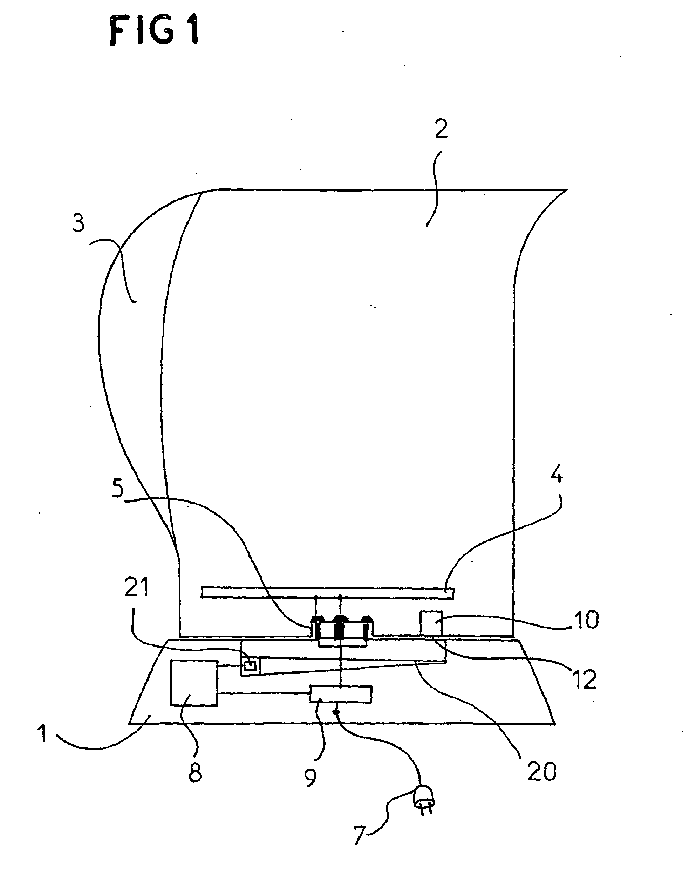

Un exemple d'une telle bouilloire est illustré à la figure 1. Cette bouilloire comporte un socle (1) sur lequel peut être mis en place un pot amovible (2). Ce pot comporte une zone de préhension (3).

Le pot (2) comporte également une résistance chauffante (4) située à proximité du fond du pot. Cette résistance chauffante (4) est reliée à un connecteur (5) concentrique, situé sur la zone du pot en regard du socle (1). Ce connecteur concentrique (5) comporte trois pôles, à savoir une phase, une masse et un neutre.

Ce connecteur (5) permet l'alimentation de la résistance chauffante (4) à partir de la tension secteur. A cet effet, le socle (1) comporte un cordon d'alimentation (7).

Conformément à l'invention, le socle (1) comporte un module électronique (8) apte à assurer la régulation de l'alimentation de la résistance électrique (4), ainsi qu'une fonction de protection. Le module électronique (8) peut ainsi assurer l'alimentation de la résistance chauffante (4) par l'intermédiaire d'un contacteur (9) commandé de façon appropriée.

Conformément à l'invention, le pot (2) est équipé de moyens électroniques spécifiques destinés à assurer la transmission optique d'une information relative à la température de l'eau (ou de l'élément chauffant du pot), en direction du socle, et à destination des moyens de régulation (8).

Plus précisément, les moyens électroniques (10) présents sur le pot comportent dans la forme illustrée un composant optoélectronique (12) assurant l'émission d'un signal infrarouge depuis la face inférieure du pot (2) vers la zone en regard du socle (1).

Plus précisément, les moyens électroniques (10) embarqués sur le pot mobile peuvent comporter une diode infrarouge (12) commandée par exemple par un signal à rapport cyclique variable. Le rapport cyclique est variable en fonction de la valeur de la résistance d'une thermistance située à proximité de l'élément chauffant, cette thermistance étant sensible à la température de l'eau ainsi qu'à celle de l'élément chauffant.

Conformément à l'invention, le pot (2) est monté sur le socle (1) de telle manière que le connecteur (5) est enclenché quelle que soit la position angulaire du pot (2) par rapport au socle.

Il n'y a donc pas d'indexation angulaire du pot par rapport au socle, ce qui facilite l'opération de mise en place du pot par rapport au socle.

Conformément à l'invention, le socle (1) comporte un guide optique particulier (20), qui permet la transmission du signal émis par la diode infrarouge (12) présente sous le pot, à destination d'un récepteur (21) lui-même relié aux moyens électroniques de régulation (8) intégrés dans le socle (1).

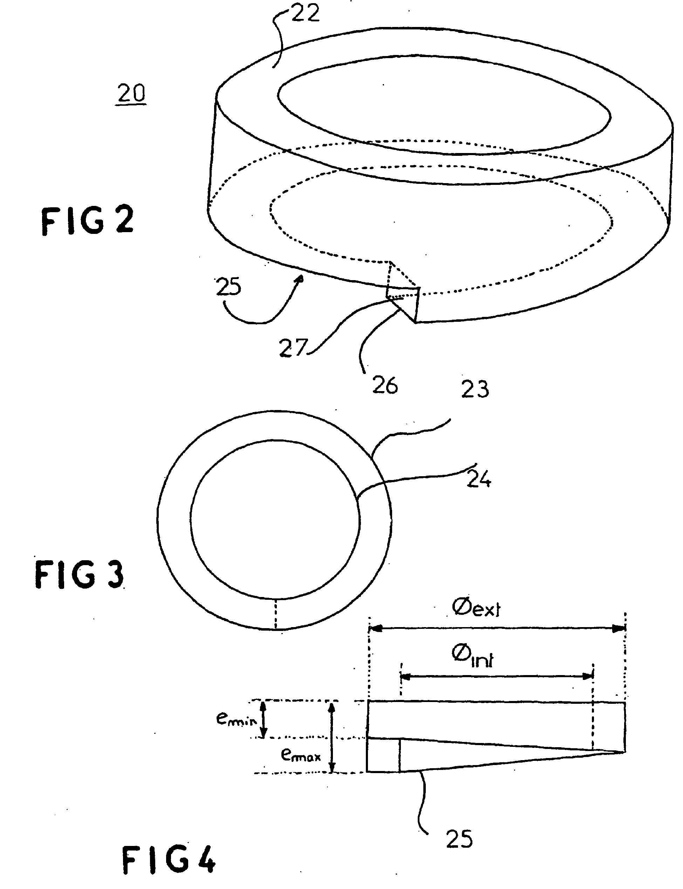

Plus précisément, le guide (20) mis en place dans le socle (1) est illustré aux figures 2 à 4. Un tel guide (20) possède une géométrie générale sensiblement annulaire. Sa face supérieure (22), qui présente une forme de couronne circulaire est visible depuis le dessus du socle (1). Le diamètre moyen du guide (20) correspond sensiblement à la distance dont est écartée la diode infrarouge (12) du pot par rapport à l'axe (13) de ce dernier. Autrement dit, la diode infrarouge se trouve à l'aplomb du guide.

La diode infrarouge (12) présente sous le pot est orientée de telle manière que le faisceau qu'elle émet présente une certaine incidence, voisine de 20° par rapport à la face supérieure (22) du guide. Plus précisément, le faisceau (15) émis par la diode infrarouge est légèrement conique, et l'axe de révolution (16) du cône forme un angle voisin de 70° avec une perpendiculaire de la face supérieure (22) du guide. Le demi angle d'ouverture du cône est d'environ 15°. La face supérieure du guide (22) est dépolie pour former des micro-aspérités qui permettent une bonne réfraction du faisceau incident à l'intérieur du guide. Cette réfraction est encore améliorée par la présence de microrainures radiales.

Le guide (20) comporte des surfaces extérieure et intérieure sensiblement cylindriques. La face inférieure (25) du guide illustrée à la figure 2 épouse une forme de rampe hélicoïdale. L'épaisseur du guide, c'est-à-dire la distance mesurée entre la face supérieure (22) et la face inférieure (25) varie donc progressivement le long de la circonférence du guide.

La face inférieure (25) du guide (20) comporte une discontinuité d'épaisseur formant un ressaut (26). Ce ressaut (26) constitue un plan incliné (27) sensiblement perpendiculaire à la face inférieure (25) ou la face supérieure (22).

Compte tenu de la variation d'épaisseur du guide, les faces inférieure (25) et supérieure (22) ne sont pas exactement parallèles, mais forment entre elles, du moins localement un léger angle.

Plus précisément, dans un exemple pratique, le guide comporte un diamètre extérieur Øₑₓₜ de 58 millimètres et un diamètre intérieur de 42 millimètres. L'épaisseur minimale eₘᵢₙ du guide, au niveau du ressaut (26) est de 10 millimètres et l'épaisseur maximale eₘₐₓ, prenant en compte le ressaut (26) est de 15 millimètres. On en déduit donc que l'angle que forme une tangente au diamètre extérieur de la face inférieure, mesurée par rapport au plan de la face supérieure est de l'ordre de 2° environ.

Les faces extérieure (23), intérieure (24) et inférieure (25) du guide (20) sont polies pour assurer un état de surface régulier, et permettre la réflection totale du faisceau circulant à l'intérieur du guide.

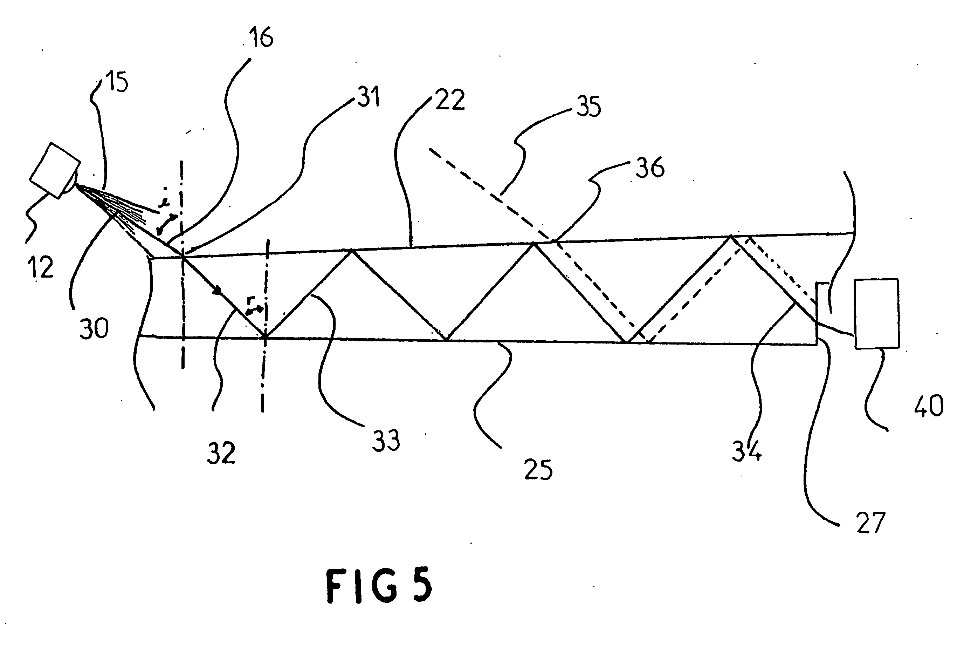

Plus précisément, la figure 5 illustre un cheminement approximatif de plusieurs faisceaux incidents pénétrant dans le guide par sa face supérieure. Ainsi, lorsqu'un faisceau pénètre avec une incidence (i) voisine de 70°, en un premier endroit (31) de la face supérieure (22) du guide, il se réfracte à l'intérieur du guide pour donner le faisceau (32). Puis, ce faisceau (32) atteint la face inférieure (25) du guide. Lorsque l'incidence (r) de ce faisceau sur la paroi de la face inférieure (25) est suffisamment élevée, le faisceau (32) se réfléchit intégralement pour donner le faisceau (33). En pratique, en utilisant un guide en polycarbonate, dont l'indice de réfraction est de 1,49, cet angle d'incidence (r) doit être supérieur à 42,16°.

Par la suite, le faisceau (33) poursuit sa progression dans le guide en se réfléchissant sur les faces extérieure, intérieure, inférieure et supérieure.

Les phénomènes de réflection totale interviennent jusqu'à ce le faisceau (33) parvienne sur le ressaut caractéristique (26), puis se réfracte dans l'air pour atteindre le récepteur (40).

La figure 5 illustre un autre faisceau (35), montré en traits pointillés, qui parvient également sur le récepteur (40), bien qu'il pénètre dans le guide en un autre point d'incidence (36).

De la sorte, quel que soit le point d'incidence (31, 36) du faisceau issu de la diode électroluminescente (12), une fraction de ce faisceau parvient sur le récepteur (40) situé dans le socle. Autrement dit, quelle que soit la position angulaire du pot (2) par rapport au socle (1), et donc de la diode électroluminescente (12) par rapport au guide caractéristique (20), le récepteur (40) solidaire du socle (1) reçoit une fraction de la lumière émise à partir du pot (2).

Ainsi, l'information qu'émet le pot, représentative de la température de l'eau ou de l'élément chauffant, et qui peut être par exemple codée sous forme de rapport cyclique variable, parvient au récepteur et est donc par la suite analysée, quelle que soit la position dans laquelle le pot est mis en place sur le socle.

Autrement dit, la transmission de l'information de température, et la régulation du chauffage qui s'ensuit, s'opèrent sans que l'utilisateur n'ait besoin de positionner le pot de façon précise par rapport au socle.

Il ressort de ce qui précède que la bouilloire ou plus généralement les appareils électroménagers comportant un socle et une partie mobile peuvent inclure des moyens de régulation situés dans le socle, et qui fonctionnent grâce à une information émise par le pot, sans indexation de la position angulaire du pot par rapport au socle. En conséquence, les moyens de régulation électroniques peuvent être mis en place dans le socle, qui n'est pas soumis à de hautes températures, et pour lequel les contraintes d'étanchéité sont moins importantes que pour le pot.

Bien entendu, l'invention est décrite avec plus de détails pour son application aux bouilloires sans fil, mais elle peut également trouver un avantage dans d'autres types d'appareil électroménager tels que notamment les cafetières, les théières, les applicateurs de cire chauffants, les appareils de cuisson ou les fers à repasser.

## Revendications

1. Appareil électroménager, comprenant un socle (1) et un élément mobile (2) apte à être mis en place de façon amovible sur le socle (1) en conservant une capacité de rotation par rapport audit socle (1), dans lequel l'élément mobile (2) comporte une résistance électrique chauffante (4) alimentée par une source d'énergie électrique associée au socle (2) via un connecteur (5) situé dans la zone de contact entre l'élément mobile (2) et le socle (1), **caractérisé en ce que** :
• l'élément mobile (2) comporte un émetteur (12) d'une onde électromagnétique, apte à émettre un signal représentatif d'une grandeur physique d'une partie de l'élément mobile (2) ;
• le socle (1) comporte
- un guide optique (20) épousant une forme générale annulaire et **comportant :**
. une face supérieure (22) sensiblement plane, destinée à recevoir un faisceau incident (30) et en réfracter une partie à l'intérieur du guide en un faisceau transmis (32);
. une face inférieure (25), sensiblement parallèle à la face supérieure (22), qui présente un ressaut (26) formant un plan (27) sensiblement perpendiculaire auxdites surfaces inférieure (25) et supérieure (22), de telle sorte qu'une partie (34) du faisceau transmis est réfracté vers l'extérieur du guide au niveau dudit ressaut (26), quel que soit le point d'incidence (31, 36) du faisceau incident sur la face supérieure (22) du guide
. dont la face supérieure (22) est en regard de l'émetteur (12) situé sur l'élément mobile (2),
- et un récepteur (40) d'ondes électromagnétiques situé en regard du ressaut (26) du.guide (20).

2. Appareil électroménager selon la revendication 1, **caractérisé en ce que** l'angle d'incidence maximal (i) du faisceau (30) émis par l'émetteur (12), mesuré par rapport à une perpendiculaire à la face supérieure (22) du guide est compris entre 60° et 80°.

3. Appareil selon la revendication 1, **caractérisé en ce que** le signal transmis est un signal alternatif dont le rapport cyclique est variable, en fonction d'une grandeur physique d'une partie de l'élément mobile.

4. Appareil selon la revendication 1, **caractérisé en ce que** l'épaisseur du guide mesurée entre les faces supérieure (22) et inférieure (25) est croissante selon la circonférence du guide, et présente une discontinuité au niveau du ressaut (26).

5. Appareil selon la revendication 4, **caractérisé en ce que** la face inférieure (25) du guide forme une rampe hélicoïdale.

6. Appareil selon la revendication 1, **caractérisé en ce que** la face supérieure (22) du guide est dépolie, toutes les autres faces (23, 24, 25) du guide étant polies.

7. Appareil selon la revendication 6, **caractérisé en ce que** la face supérieure (22) du guide comporte des rainures radiales.

8. Appareil selon la revendication 1, **caractérisé en ce que** les faces latérales intérieure (24) et extérieure (23) du guide, reliant les faces supérieure (22) et inférieure (25) sont cylindriques.

## Claims

1. A household electrical appliance comprising a base (1) and a mobile element (2) suitable for being put in place removably on the base (1) while continuing to be movable in rotation relative to said base (1), in which appliance the mobile element (2) includes a heater electrical resistor (4) powered by an electrical power source associated with the base (2) via a connector (5) situated in the zone of contact between the mobile element (2) and the base (1), said household electrical appliance being **characterized in that**:
· the mobile element (2) includes an emitter (12) for emitting an electromagnetic wave, which emitter is suitable for emitting a signal representative of a physical magnitude of a portion of the mobile element (2);
· the base (1) includes:
- a light guide (20) that is annular in overall shape and that has:
* a top face (22) that is substantially plane and that serves to receive an incident beam (30) and to refract a portion thereof into the guide in the form of a guided beam (32); and
* a bottom face (25) that is substantially parallel to the top face (22), and that has a step (26) forming a surface (27) that is substantially perpendicular to said bottom surface (25) and to said top surface (22), so that a portion (34) of the guided beam is refracted towards the outside of the guide at said step (26), regardless of the point of incidence (31, 36) of the incident beam on the top face (22) of the guide;
* whose top face (22) faces the emitter (12) situated on the mobile element (2); and
- a receiver (40) for receiving electromagnetic waves, which receiver is situated facing the step (26) of the guide (20).

2. A household electrical appliance according to claim 1, **characterized in that** the maximum angle of incidence (i) of the beam (30) emitted by the emitter (12), as measured relative to the top face (22) of the guide, lies in the range 60° to 80°.

3. An appliance according to claim 1, **characterized in that** the emitted signal is an alternating signal whose duty ratio varies, as a function of a physical magnitude of a portion of the mobile element.

4. An appliance according to claim 1, **characterized in that** the height of the guide, as measured between the top face (22) and the bottom face (25) increases over the circumference of the guide, and presents a discontinuity at the step (26).

5. An appliance according to claim 4, **characterized in that** the bottom face (25) of the guide forms a helical ramp.

6. An appliance according to claim 1, **characterized in that** the top face (22) of the guide is frosted, all of the other faces (23, 24, 25) of the guide being polished.

7. An appliance according to claim 6, **characterized in that** the top face (22) of the guide is provided with radial grooves.

8. An appliance according to claim 1, **characterized in that** the inside side face (24) and the outside side face (23) of the guide, which faces interconnect the top face (22) and the bottom face (25), are cylindrical.

## Patentansprüche

1. Elektrohaushaltsgerät mit einem Sockel (1) und einem beweglichen Element (2), das in abnehmbarer Weise auf dem Sockel (1) angeordnet werden kann und dabei eine Rotationsfähigkeit bezüglich des Sockels (1) beibehält, wobei das bewegliche Element (2) einen elektrischen Heizwiderstand (4) aufweist, der von einer elektrischen Energiequelle gespeist ist, die dem Sockel über einen Stecker (5) zugeordnet ist, der sich in dem Kontaktbereich zwischen dem beweglichen Element (2) und dem Sockel (1) befindet, **dadurch gekennzeichnet, dass**
• das bewegliche Element (2) einen Sender (12) einer elektromagnetischen Welle aufweist, der ein Signal senden kann, das für eine physikalische Größe eines Teil des beweglichen Elements (2) repräsentativ ist;
• der Sockel (1) folgendes aufweist:
- einen Lichtleiter (20), der eine allgemeine ringförmige Gestalt hat und folgendes enthält:
· eine im Wesentlichen ebene obere Fläche (22), die dazu bestimmt ist, einen einfallenden Bündel (30) zu empfangen und einen Teil davon innerhalb des Lichtleiters zu einem übertragenen Bündel (32) zu brechen;
· eine untere Fläche (25), die im Wesentlichen parallel zur oberen Fläche (22) ist und einen Vorsprung (26) aufweist, der eine zur unteren Fläche (25) und oberen Fläche (27) im Wesentlichen senkrechte Ebene bildet, so dass ein Teil (34) des übertragenen Bündels auf der Höhe des Vorsprungs (26) nach außerhalb des Lichtleiters gebrochen ist unabhängig vom Einfallpunkt (31, 36) des auf der oberen Fläche (22) des Lichtleiters einfallenden Bündels,
dessen obere Fläche (22) gegenüber dem Sender (12) liegt, der sich auf dem beweglichen Element (2) befindet,
- und einen Empfänger (40) elektromagnetischer Wellen, der sich gegenüber dem Vorsprung (26) des Lichtleiters befindet.

2. Elektrohaushaltsgerät nach Anspruch 1, **dadurch gekennzeichnet, dass** der maximale Einfallwinkel (i) des vom Sender (12) gesendeten Bündels (30), der in Bezug auf eine Senkrechte bezüglich der oberen Fläche (22) des Lichtleiters gemessen wird, zwischen 60° und 80° beträgt.

3. Gerät nach Anspruch 1, **dadurch gekennzeichnet, dass** das übertragene Signal ein alternierendes Signal ist, dessen zyklisches Verhältnis in Abhängigkeit einer physikalischen Größe eines Teils des beweglichen Elements variabel ist.

4. Gerät nach Anspruch 1, **dadurch gekennzeichnet, dass** die zwischen der oberen Fläche (22) und der unteren Fläche (25) gemessene Dicke des Lichtleiters entsprechend dem Umfang des Lichtleiters zunimmt und eine Unstetigkeit auf der Höhe des Vorsprungs (26) aufweist.

5. Gerät nach Anspruch 4. **dadurch gekennzeichnet, dass** die Unterseite (25) des Lichtleiters eine spiralförmige Rampe bildet.

6. Gerät nach Anspruch 1, **dadurch gekennzeichnet, dass** die obere Fläche (22) des Lichtleiters mattiert ist, wobei alle anderen Flächen (23, 24, 25) des Lichtleiters glatt sind.

7. Gerät nach Anspruch 6, **dadurch gekennzeichnet, dass** die obere Fläche (22) des Lichtleiters radiale Nuten aufweist.

8. Gerät nach Anspruch 1, **dadurch gekennzeichnet, dass** die innere Seitenfläche (24) und die äußere Seitenfläche (23) des Lichtleiters, die die obere Fläche (22) und die untere Fläche (25) verbinden, zylindrisch sind.
